(19) Europäisches Patentamt / European Patent Office / Office européen des brevets

(11) **EP 4 756 653 A1**

(12) **DEMANDE DE BREVET EUROPEEN**

(43) Date de publication:
**10.06.2026 Bulletin 2026/24**

(21) Numéro de dépôt: **25208084.1**

(22) Date de dépôt: **10.10.2025**

(51) Classification Internationale des Brevets (IPC):
**G06F 21/55** (2013.01)   **G06F 21/60** (2013.01)
**G06F 21/64** (2013.01)   **G06Q 20/06** (2012.01)
**G06Q 20/10** (2012.01)   **G06Q 20/36** (2012.01)
**G06Q 20/38** (2012.01)   **G06Q 20/40** (2012.01)
**H04L 9/40** (2022.01)

(52) Classification Coopérative des Brevets (CPC):
**G06F 21/55; G06F 21/606; G06F 21/64;
G06Q 20/065; G06Q 20/10; G06Q 20/36;
G06Q 20/3674; G06Q 20/3823; G06Q 20/3825;
G06Q 20/4012; H04L 63/0442; H04L 63/0838;
H04L 63/126;** G06Q 2220/00

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **06.12.2024 FR 2413551**

(71) Demandeur: **IDEMIA France
92400 Courbevoie (FR)**

(72) Inventeurs:
• **DOTTAX, Emmanuelle
92400 Courbevoie (FR)**
• **COURQUIN, Yannick
92400 Courbevoie (FR)**
• **BOUSQUET, Nicolas
92400 Courbevoie (FR)**

(74) Mandataire: **Idemia
Service IP / IST
2, place Samuel de Champlain
92400 Courbevoie (FR)**

(54) **PROCÉDÉ DE SIGNATURE DE TRANSACTIONS SÉCURISÉ**

(57) Procédé comprenant les étapes suivantes, mises en œuvre par un dispositif signataire: réception (100) de données de transaction ($, add) émanant d'un terminal et indiquant un bénéficiaire et un montant d'actifs numériques à transférer au bénéficiaire ; détermination (102) d'un code secret (PIN), chiffrement des données de transaction et du code produisant une requête (req) comprenant les données de transaction et le code secret sous forme chiffrée ; envoi (106) de la requête (req) au terminal qui transmet la requête (req) à un serveur ; réception (108) d'un code d'épreuve émanant du terminal ; vérification (110) de correspondance entre le code secret et le code d'épreuve ; signature numérique (112) des données de transaction à condition que le code secret et le code d'épreuve correspondent, de sorte à produire des données de transaction signées (Trx) ; envoi (112) des données de transaction signées (Trx) au terminal.

Figure 3

EP 4 756 653 A1

## Description

**DOMAINE DE L'INVENTION**

La présente invention concerne un procédé de signature de transactions.

**ETAT DE LA TECHNIQUE**

La propriété d'actifs numériques comme de la crypto-monnaie est prouvée par des signatures : un utilisateur prouve cette propriété en signant une transaction à réaliser, la validité de cette signature est ensuite vérifiée, ainsi qu'un lien entre la clé publique de vérification et les actifs numériques à dépenser. La clé publique de vérification est associée à une clé privée propre à cet utilisateur. Ainsi, un utilisateur de crypto-monnaie doit gérer sa clé privée secrète, et la sécurité de tous ses fonds dépend du secret de cette clé.

Un portefeuille matériel peut être utilisé pour stocker et gérer l'utilisation de sa clé privée. Cette solution fournit un niveau de sécurité élevé. Chaque fois que l'utilisateur souhaite effectuer une transaction, il fournit les données de la transaction (montant et « adresse » du bénéficiaire) au portefeuille matériel, afin que ce dernier puisse signer ces données de transaction avec la clé privée stockée dans le portefeuille matériel. La transaction signée pourra ensuite être validée, par exemple par un réseau de type chaîne de blocs (« blockchain » en anglais).

Or, il est important que l'utilisateur soit convaincu que le portefeuille signera exactement la transaction qu'il a demandé, et non une modification de celle-ci. Un attaquant pourrait en effet mettre à jour les données de transaction, en remplaçant le bénéficiaire de la transaction par un autre (lui-même par exemple) et/ou en augmentant le montant de la transaction, pour obtenir plus d'argent.

Pour se protéger de telles attaques, certains portefeuilles matériels sont équipés d'une interface utilisateur permettant de saisir ou de vérifier ces informations. Si le portefeuille dispose d'un clavier, l'utilisateur peut l'utiliser pour saisir les détails de la transaction directement sur le portefeuille matériel. Un écran d'affichage peut également être utilisé, en complément d'un clavier, ou seul. Dans ce cas, un terminal peut être utilisé pour la saisie ou la sélection des données de transaction, puis communiquer ces données au portefeuille matériel ; ces données sont ensuite affichées par l'écran d'affichage du portefeuille matériel, permettant à l'utilisateur de vérifier que la transaction qu'il a demandée n'a pas entre-temps été modifiée par le terminal ou par une intervention sur la communication entre le terminal et le portefeuille matériel.

Cependant, un écran ou un clavier ont un coût et peuvent être difficiles/peu pratiques à utiliser pour certains utilisateurs, et de plus ces périphériques d'entrée / sortie pourraient eux même être susceptible de subir une attaque afin d'altérer les paramètres de la transaction.

**EXPOSE DE L'INVENTION**

Un problème technique à résoudre et de faire en sorte qu'un dispositif signataire signe des données de transaction avec un bon niveau de confiance sans pour autant augmenter le coût de fabrication de ce dispositif signataire.

Ce problème technique est résolu par un procédé comprenant les étapes suivantes, mises en œuvre par un dispositif signataire, tel qu'un portefeuille matériel :

- réception de données de transaction émanant d'un terminal, les données de transaction indiquant un bénéficiaire et un montant d'actifs numériques à transférer au bénéficiaire,
- détermination d'un code secret,
- chiffrement des données de transaction et du code secret à l'aide d'une clé de chiffrement, de sorte à produire une requête comprenant les données de transaction et le code secret sous forme chiffrée,
- envoi de la requête au terminal, le terminal étant configuré pour transmettre la requête à un serveur, le serveur étant configuré pour :

  ○ déchiffrer la requête à l'aide d'une clé de déchiffrement, de sorte à récupérer les données de transaction et le code secret,
  ○ mettre en œuvre une mesure pour communiquer les données de transaction en association avec le code secret à un utilisateur du terminal,

- réception d'un code d'épreuve émanant du terminal après la mise en œuvre de la mesure,
- vérification de correspondance entre le code secret et le code d'épreuve,
- signature numérique des données de transaction à condition que le code secret et le code d'épreuve correspondent, de sorte à produire des données de transaction signées,
- envoi des données de transaction signées au terminal.

Le procédé, qui constitue un premier objet de la présente divulgation, peut en outre comprendre les caractéristiques optionnelles suivantes, prises seules ou en combinaison à chaque fois que cela est possible techniquement.

De préférence, la clé de chiffrement et la clé de déchiffrement forment une paire de clés asymétrique.

De préférence, les données de transaction et/ou le code d'épreuve sont reçus par communication directe entre le dispositif signataire et le terminal.

De préférence, le dispositif signataire est ou comprend une carte à puce.

De préférence, la requête est signée numériquement par le dispositif signataire, et le serveur est configuré pour vérifier si la requête a été signée numériquement par le dispositif signataire, la mesure étant mise en œuvre à condition que la vérification révèle que la requête a été signée numériquement par le dispositif signataire.

De préférence, le code d'épreuve est un code qui été saisi sur le terminal.

De préférence, la mesure comprend l'envoi d'un message comprenant les données de transaction en association avec le code secret à un dispositif destinataire.

De préférence, le dispositif destinataire est distinct du terminal.

De préférence, les données de transaction émanant du terminal ont été envoyées au dispositif signataire sur commande d'une première application du terminal, et la mesure comprend l'envoi d'un message comprenant les données de transaction en association avec le code secret à une deuxième application du terminal indépendante de la première application, la deuxième application étant configurée pour causer une restitution des données de transaction et du code secret à l'utilisateur par un périphérique de sortie du terminal.

De préférence, le serveur est configuré pour générer des données graphiques et pour inclure les données graphiques dans le message, les données graphiques présentant : des caractères indiquant le bénéficiaire, le montant et le code secret, et un bruit parasite propre à fausser une reconnaissance optique des caractères par une machine.

De préférence, le serveur est configuré pour générer le message sous forme d'un message vocal restituant les données de transaction et le code secret, lorsque le message vocal est joué par un haut-parleur.

De préférence, le message est un message textuel.

Un deuxième objet de la présente divulgation est constitué par un produit programme d'ordinateur comprenant des instructions de code de programme pour l'exécution des étapes du procédé tel que défini précédemment, lorsque ce programme est exécuté par un dispositif signataire.

Un troisième objet de la présente divulgation est constitué par un système comprenant un dispositif signataire, un terminal et un serveur, dans lequel :

- le dispositif signataire est configuré pour : recevoir des données de transaction émanant du terminal, les données de transaction indiquant un bénéficiaire et un montant d'actifs numériques à transférer au bénéficiaire, déterminer un code secret, chiffrer les données de transaction et le code secret à l'aide d'une clé de chiffrement, de sorte à produire une requête comprenant les données de transaction et le code secret sous forme chiffrée, et envoyer la requête au terminal ;
- le terminal est configuré pour transmettre la requête au serveur ;

- le serveur est configuré pour : déchiffrer la requête à l'aide d'une clé de déchiffrement, de sorte à récupérer les données de transaction et le code secret, mettre en œuvre une mesure pour communiquer les données de transaction en association avec le code secret à un utilisateur du terminal ;
- le terminal est configuré pour envoyer un code d'épreuve au dispositif signataire après la mise en œuvre de la mesure ;
- le dispositif signataire est configuré pour : vérifier une correspondance entre le code secret et le code d'épreuve, signer numériquement les données de transaction à condition que le code secret et le code d'épreuve correspondent, de sorte à produire des données de transaction signées, et envoyer les données de transaction signées au terminal.

Ce système peut être configuré pour la mise en œuvre de chacune des possibilités de réalisation envisagées pour le procédé tel que défini précédemment.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

La figure 1 et la figure 2 illustrent de façon schématique un système pour signer des transactions.
La figure 3 est un organigramme d'étapes d'un procédé selon un mode de réalisation de l'invention.

Sur l'ensemble des figures, les éléments similaires portent des références identiques.

## DESCRIPTION DETAILLEE DE L'INVENTION

### 1) Système

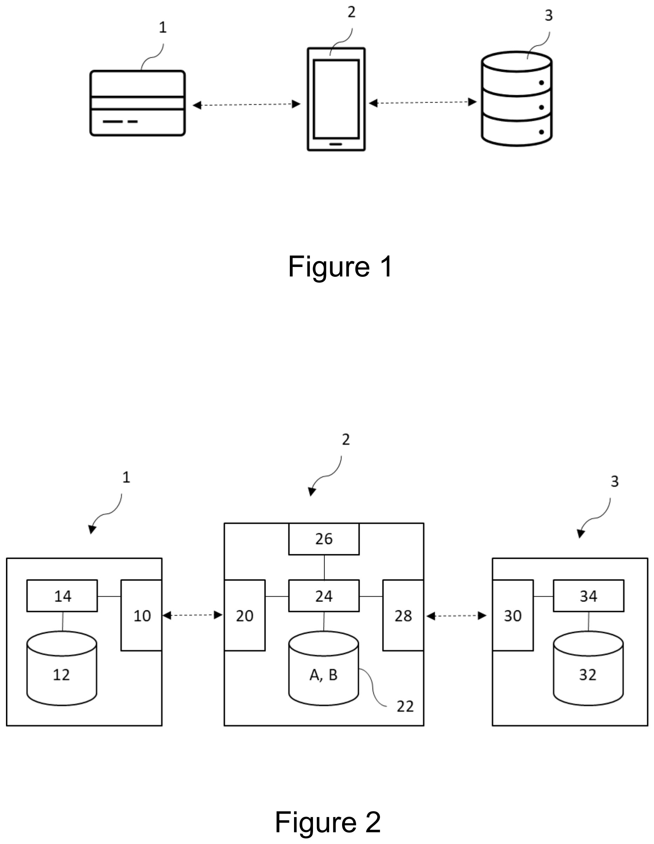

En référence à la figure 1 et à la figure 2, un système comprend un dispositif signataire 1, un terminal 2 et un serveur 3.

### 1.1) Dispositif signataire

Le dispositif signataire 1 comprend une interface de communication 10, une mémoire 12 et un processeur 14.

L'interface de communication 10 est propre à communiquer directement avec le terminal 2. Par « directement », on veut dire que cette communication est réalisée de manière ad hoc, sans passer par un serveur distant ou plus généralement un réseau distant.

A cet effet, l'interface de communication 10 comprend un port physique propre à être relié électriquement à un port du terminal 2 et/ou une antenne pour échanger des ondes radio avec une antenne du terminal 2, via un protocole quelconque : en champ en proche (NFC), Bluetooth, Wi-Fi, etc.

La mémoire 12 stocke au moins une clé privée *Wsk* ayant pour fonction de prouver la possession d'actifs numériques. Comme on verra dans la suite, cette clé privée est utilisée pour signer des transactions. La mémoire peut stocker plusieurs clés privées de ce type ; les clés privent peuvent alors être dérivées d'une même clé maître également stockée par la mémoire 12. De préférence, la mémoire 12 est comprise dans un élément sécurisé du dispositif signataire 1 (« secure element » en anglais). De la sorte, le stockage des données est sécurisé.

Dans un mode de réalisation, les actifs numériques sont de la cryptomonnaie (par exemple des bitcoins).

De préférence, le dispositif signataire 1 est un portefeuille matériel (« hardware wallet en anglais »). Contrairement aux portefeuilles logiciels, qui sont des applications installées sur un ordinateur ou un smartphone, les portefeuilles matériels sont des appareils dédiés, souvent ressemblant à des clés USB ou des cartes à puces, qui gardent les clés privées hors ligne et à l'abri des cyberattaques.

Toutefois, il est à noter que les actifs numériques auxquels se rapporte une clé privée ne sont pas forcément stockés en eux-mêmes par le dispositif signataire 1 ; le dispositif signataire 1 peut en effet se borner à stocker le droit de les utiliser (la clé privée). Par exemple, lorsque les actifs numériques sont de la cryptomonnaie, ils sont stockés dans une chaine de blocs (« blockchain »), qui est en réalité une base de données répartie sur plusieurs équipements réseau.

La mémoire 12 stocke également un programme comprenant des instructions de code exécutable par le processeur.

Le processeur 14 du dispositif signataire 1 est configuré pour exécuter le programme. Cette exécution cause la mise en œuvre d'étapes d'un procédé qui seront décrites plus loin.

Le dispositif signataire 1 est dépourvu d'écran d'affichage et de clavier. De préférence, le dispositif signataire comprend comme seul moyen de saisie d'information un capteur biométrique.

Dans certains modes de réalisation, le dispositif signataire 1 se présente sous la forme d'un module unique. Le dispositif signataire 1 est par exemple une carte à puce ou une clé USB.

Dans d'autres modes de réalisation, le dispositif signataire 1 comprend deux modules :

- un module de traitement qui inclut la mémoire 12 et le processeur 14, et
- un module d'interconnexion amovible par rapport au module de traitement, et incluant l'interface de communication 10.

Le module d'interconnexion est propre à être relié électriquement au module de traitement, de sorte que des données reçues par l'interface de communication 10 soient transférée au processeur 14 et/ou à la mémoire 12, et réciproquement de sorte que le processeur 14 puisse causer l'envoi de données à l'extérieur du dispositif signataire 1 via l'interface de communication 10. Le module d'interconnexion peut également être détaché du module de traitement.

A titre d'exemple, le module de traitement est une carte à puce, et le module d'interconnexion comprend une fente pour recevoir au moins en partie la carte à puce, établissant ainsi une communication physique entre eux.

Quelle que soit la forme du dispositif signataire 1 (en un seul module ou en plusieurs modules), les communications entre le dispositif signataire 1 et le terminal sont directes comme indiqué précédemment, sans passer par un serveur distant. Ainsi, les communications entre ces deux équipements ont vocation à avoir lieu à une échelle locale, entre des équipements détenus par un même utilisateur.

**1.2) Terminal**

Le terminal 2 comprend une première interface de communication 20 pour communiquer avec le dispositif signataire 1, une mémoire 22, au moins un processeur 24, une interface homme-machine 26, et, optionnellement, une deuxième interface de communication 28 pour communiquer avec le serveur 3.

La première interface de communication 20 est propre à communiquer directement avec l'interface de communication 10 du dispositif signataire 1. Cette communication peut se faire par contact électrique et/ou par des ondes radio (par exemple par une communication en champ proche NFC). Lorsque le dispositif signataire 1 est une carte à puce ou une clé USB, le terminal 2 peut comprendre une fente dans laquelle le dispositif signataire peut être inséré pour établir un contact électrique entre le port de dispositif signataire 1 et un port du terminal 2.

La mémoire 22 stocke également au moins une application comprenant des instructions de code exécutable par le processeur 24. Dans un mode de réalisation, la mémoire stocke deux applications indépendantes l'une de l'autre : une première application A et une deuxième application B.

Le ou chaque processeur 24 est configuré pour exécuter la ou chaque application A, B. Cette exécution cause la mise en œuvre d'étapes qui seront décrits plus loin. Par exemple, le même processeur exécute les applications A, B. En variante, deux processeurs différents exécutent respectivement les applications A, B. L'un ou l'autre processeur peut être muni d'une enclave sécuritaire.

L'interface homme-machine 26 comprend un périphérique de sortie, typiquement un écran d'affichage, pour restituer des informations à un utilisateur de manière visuelle, et éventuellement un haut-parleur pour restituer des informations un utilisateur de manière sonore.

L'interface homme-machine 26 comprend en outre un périphérique d'entrée permettant à un utilisateur du terminal 2 de détecter des actions utilisateurs susceptibles d'être traitées par l'application A au cours de son exécution. Par exemple, le périphérique d'entrée est ou comprend un élément sensible au toucher, formant un écran tactile avec l'écran d'affichage.

Le terminal 2 est par exemple un smartphone ou un ordinateur portable générique, personnalisé avec l'application A, voire avec l'application B (on verra dans la suite que l'application B peut en variante être installée dans un dispositif qui est distinct du terminal 2).

La deuxième interface de communication 28 est propre à communiquer le serveur 3. Elle peut être différente de la première interface de communication 20. La deuxième interface de communication peut être de n'importe quel type : filaire (Ethernet) ou radio sans fil (cellulaire, Wi-Fi, etc.).

### 1.3) Serveur 3

Le serveur 3 comprend une interface de communication 30, une mémoire 32 et au moins un processeur 34.

L'interface de communication 30 est propre à communiquer avec la deuxième interface de communication du terminal 2, ou avec un autre dispositif destinataire présentant les mêmes composants que ceux décrits plus haut.

La mémoire 32 stocke un programme comprenant des instructions de code exécutable par le ou chaque processeur 34.

Le ou chaque processeur 34 est configuré pour exécuter le programme. Cette exécution cause la mise en œuvre d'étapes qui seront décrits plus loin.

### 2) Procédé de signature de transactions

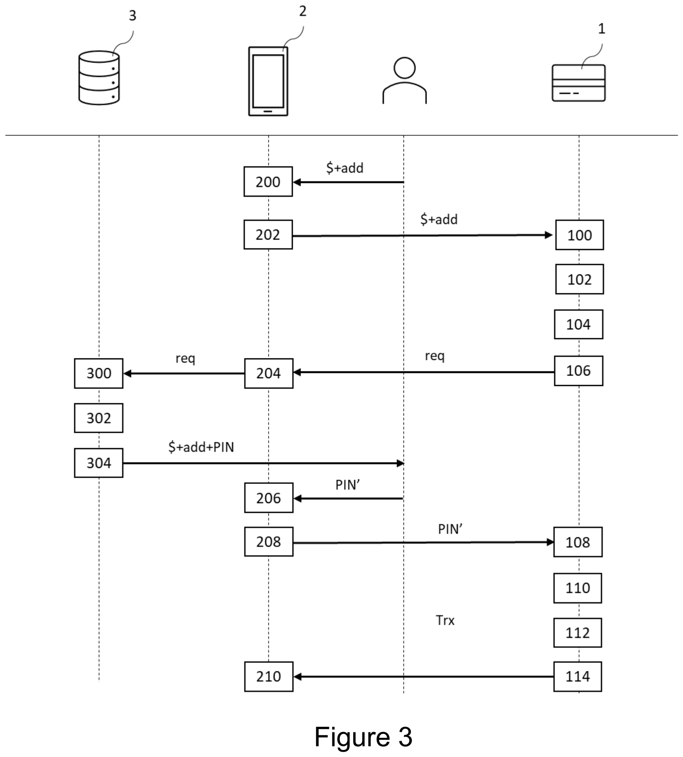

En référence à la figure 3, un procédé mis en œuvre par le système décrit précédemment comprend les étapes suivantes.

Dans une étape 200, le terminal 2 détecte qu'un utilisateur demande la réalisation d'une transaction d'actifs numériques. Par exemple, cette demande est réalisée via un menu de la première application A, affichée sur l'écran d'affichage du terminal 2, et avec laquelle lequel l'utilisateur a interagi.

En particulier, la première application A du terminal 2 détecte à l'étape 200 une saisie ou une sélection, par l'utilisateur du terminal 2, d'un bénéficiaire et d'un montant d'actifs numériques à transférer à ce bénéficiaire.

La première application A du terminal 2 génère des données de transaction indicatives du bénéficiaire et du montant. Par exemple, le bénéficiaire peut être caractérisé par une adresse *add,* et le montant par une valeur que l'on note $ dans la suite.

Dans une étape 202, la première application A du terminal 2 commande l'envoi au dispositif signataire 1 d'une demande de signature des données de transaction. La demande de signature inclut les données *add* et $. La demande de signature est transmise via un canal de communication préalablement établi entre l'interface de communication 10 du dispositif signataire 1 et la première interface de communication 20 du terminal 2.

Dans une étape 100, le dispositif signataire 1 reçoit la demande de signature via son interface de communication 10 ; la demande de signature est transmise au processeur 14.

Dans une étape 102, avant de procéder une signature, le dispositif signataire 1 commence par déterminer un code secret, noté *PIN.* Le code secret est par exemple généré par le dispositif signataire 1 de manière aléatoire ou pseudo-aléatoire, de sorte que le code secret généré varie à chaque nouvelle demande de signature reçue par le dispositif signataire 1.

Dans une étape 104, le dispositif signataire 1 chiffre les données de transaction et le code secret à l'aide d'une clé de chiffrement *Spk,* de sorte à produire une requête *req* comprenant les données de transaction et le code secret sous forme chiffrée.

La clé de chiffrement est une clé publique du serveur 3, qui été fournie au dispositif signataire 1 lors d'une étape préliminaire, par exemple en usine.

Le chiffrement réalisé peut être de la forme suivante :

$$req = Aenc(Spk, \$ + add + PIN)$$

où *Aenc* est une fonction cryptographique de chiffrement.

En sus du chiffrement, le dispositif signataire 1 peut mettre en œuvre une signature numérique à l'étape 104, de sorte que la requête *req* obtenue soit non seulement chiffrée, mais également signée numériquement, ce qui permet de certifier que la requête *req* a été produite par le dispositif signataire 1.

Dans une étape 106, le dispositif signataire 1 envoie la requête *req* au terminal 2.

Dans une étape 204, le terminal 2 transmet la requête au serveur 3. Cette transmission est par exemple causée par la première application A.

Dans une étape 300, le serveur 3 reçoit la requête *req.*

Dans une étape 302, le serveur déchiffre la requête *req* à l'aide d'une clé de déchiffrement *Ssk* formant une paire de clés asymétriques avec la clé de chiffrement *Spk,* de sorte à récupérer les données de transaction et le code secret en clair.

Le déchiffrement peut être représenté par la formule ci-dessous :

$$\$ + add + PIN = Decv(Ssk, req)$$

où *Decv* est une fonction cryptographique de déchiffrement.

La clé de déchiffrement *Ssk* est une clé privée du serveur 3 conservée dans sa mémoire 32 et n'étant pas communiquée à l'extérieur du serveur 3.

Le serveur 3 peut également vérifier si la requête *req* a été signée numériquement par le dispositif signataire 1. Cette vérification peut être mise en œuvre à l'aide d'une clé publique soit fournie par le dispositif signataire 1 via un certificat, soit récupérée dans une base de données dans laquelle la clé publique est associée à un identifiant propre au dispositif signataire 1. De préférence, cette vérification est mise en œuvre avant le déchiffrement 302. Dans la négative, le procédé peut s'interrompre. Dans la positive, le serveur réalise le déchiffrement de l'étape 302.

Dans l'étape 304, le serveur met en œuvre une mesure pour communiquer les données de transaction en association avec le code secret à un utilisateur du terminal 2. Cette étape peut faire l'objet de différents modes de réalisation.

Dans certains modes de réalisation, la mesure 304 comprend l'envoi par le serveur 3 d'un message contenant les données de transaction en association avec le code, le message étant envoyé à un dispositif destinataire. Le dispositif destinataire en question peut avoir été enrôlé au préalable auprès du serveur lors d'une étape d'enrôlement préliminaire, permettant ainsi au serveur 3 de savoir qu'il est associé au dispositif signataire duquel émane la requête *req,* ce qui suppose implicitement que le dispositif destinataire est en possession de l'utilisateur.

Le message envoyé à l'étape 304 peut par ailleurs prendre différentes formes.

Dans certaines variantes, le message est un message textuel. Le message textuel peut être un courriel envoyé à une adresse préalablement enrôlée et considérée appartenir au possesseur légitime du dispositif signataire 1. La deuxième application B est alors un navigateur internet ou bien une application de messagerie de type courriel, grâce à laquelle l'utilisateur peut consulter le courriel envoyé au dispositif destinataire via l'adresse préalablement enrôlée. Alternativement, le message textuel est un SMS, envoyé vers un numéro de téléphone préalablement enrôlé. La deuxième application B est alors une application de messagerie SMS du dispositif destinataire.

Dans d'autres variantes, le message est un message vocal généré par le serveur 3 apte à restituer les données de transaction et le code à l'utilisateur de manière sonore, lorsque le message vocal est joué par un haut-parleur du dispositif destinataire. Dans ce cas, la deuxième application B peut être un lecteur audio pour jouer le message vocal, afin que celui-ci soit restitué par le haut-parleur du dispositif destinataire.

Dans d'autres variantes, le serveur 3 génère des données graphiques présentant des caractères indiquant le bénéficiaire, le montant et le code secret, et présentant en outre un bruit parasite propre à fausser une reconnaissance optique des caractères par une machine (« optical character recognition » en anglais, abrégé en OCR). Les données graphiques peuvent comprendre une image présentant toutes ces informations, ou bien plusieurs images dans lesquelles ces informations sont réparties. Le serveur 3 inclut les données graphiques dans le message à envoyer au dispositif destinataire. De telles données graphiques présentent l'avantage de renforcer la sécurité du procédé contre des attaques qui chercherait à intercepter le message pour le modifier.

L'envoi du message contenant les données de transaction et le code peut être précédé de l'envoi, par le serveur au dispositif destinataire, d'un lien vers une page internet page internet présentant ou donnant accès aux données de transaction en association avec le code. L'utilisateur du dispositif destinataire doit alors accéder à la page via un navigateur internet, et c'est dans un second temps que le message contenant les données de transaction et le code est téléchargé vers le dispositif destinataire.

Différents types de dispositifs destinataires sont par ailleurs envisageables. Dans certaines variantes, le dispositif destinataire est distinct du terminal 2, ce qui augmente la surface à attaquer, et rend donc le procédé plus sécurisé. Dans d'autres variantes, le dispositif destinataire du message est le terminal 2 qui a été utilisé pour initier la demande de signature de transaction auprès du dispositif signataire 1, comme décrit ci-dessus.

Lorsque le dispositif destinataire du message est le terminal 2, alors le message peut être adressé à la deuxième application B du terminal indépendante de la première application A utilisée précédemment. Le message n'est pas perçu par la première application A. La deuxième application B cause une restitution des données de transaction et du code à l'utilisateur par un périphérique de sortie du terminal (écran d'affichage ou haut-parleur, selon la variante mise en œuvre). Cette séparation entre les deux applications augmente également la surface à attaquer du procédé. De plus, la séparation précédente permet indirectement de diminuer le risque associé. En effet, si une attaque avait lieu, elle serait moins « massive » étant donné qu'elle n'impacterait qu'une configuration d'application A et B parmi l'ensemble des configurations possibles.

Dans une étape 206, la première application A du terminal 2 détecte que l'utilisateur a saisi un code d'épreuve, noté *PIN'* (et censé correspondre au code secret dans un cas normal).

Cette détection peut faire suite à l'affichage d'une invitation en ce sens sur l'écran d'affichage du terminal 2, cet affichage étant causé par la première application A, par exemple après l'envoi des données de transaction au dispositif signataire à l'étape 202.

Dans une étape 208, la première application A du terminal 2 cause l'envoi du code d'épreuve *PIN'* saisi au dispositif signataire 1, via la première interface de communication 20.

Dans une étape 108, le dispositif signataire reçoit le code d'épreuve.

Dans une étape 110, le dispositif signataire vérifie si le code secret *PIN* et le code d'épreuve *PIN'* correspondent.

Si le code secret *PIN* et le code d'épreuve *PIN'* correspondent, le dispositif signataire passe à l'étape 112.

A l'étape 112, le dispositif signataire 1 signe numériquement les données de transaction à l'aide de sa clé privée *Wsk,* de sorte à produire des données de transaction signées *Trx.* Cette étape est connue de l'état de la technique. Cette signature peut être représentée par la formule suivante :

$$Trx = Sign(Wsk, \$ + add)$$

où *Sign* est une fonction cryptographique de signature numérique.

Dans une étape 114, le dispositif signataire envoie les données de transaction signées *Trx* au terminal 2.

Le terminal 2 reçoit les données de transaction signées *Trx* dans une étape 210. Le terminal 2 peut ensuite émettre une demande de validation des données de transaction signées en vue de la réalisation effective du transfert du montant d'actifs numérique \$ auprès du bénéficiaire ayant l'adresse *add.* Dans un mode de réalisation, les données de transaction signées font l'objet d'une validation par des équipements réseau (« mineurs ») ayant accès à une chaîne de blocs constituant une base de données distribuée (blockchain en anglais), et sont inscrites dans la chaîne de blocs.

Si au contraire le code secret *PIN* et le code d'épreuve *PIN'* ne correspondent pas, le dispositif signataire 1 ne met pas en œuvre l'étape 112 de signature numérique. Le transfert d'actifs susmentionné ne pourra pas être validé en l'absence de signature.

A titre complémentaire, le dispositif signataire 1 peut également mettre en œuvre une contremesure si le code secret *PIN* et le code d'épreuve *PIN'* ne correspondent pas. Un exemple de contremesure est la suivante : le dispositif signataire met à jour un compteur d'erreurs qu'il mémorise, puis compare le compteur d'erreurs à un seuil prédéfini. Si le seuil est atteint par le compteur, le dispositif signataire se bloque, de sorte à empêcher toute signature ultérieure. Le même compteur est réinitialisé à zéro lorsque le code secret *PIN* et le code d'épreuve *PIN'* correspondent (sauf si le compteur a atteint le seuil).

**Autres modes de réalisation**

Dans ce qui précède, il a été discuté un mode de réalisation dans lequel la clé de chiffrement et la clé de déchiffrement forment une paire de clés asymétriques. Cet aspect participe à la sécurité du procédé. Toutefois, dans d'autres modes de réalisation, la clé de chiffrement et la clé de déchiffrement pourraient être identiques, auquel cas le chiffrement 104 et le déchiffrement 302 sont symétriques, par exemple un chiffrement/déchiffrement AES.

**Revendications**

1. Procédé comprenant les étapes suivantes, mises en œuvre par un dispositif signataire, tel qu'un portefeuille matériel :

   • réception (100) de données de transaction (\$, add) émanant d'un terminal, les données de transaction indiquant un bénéficiaire et un montant d'actifs numériques à transférer au bénéficiaire,
   • détermination (102) d'un code secret (PIN),
   • chiffrement des données de transaction et du code secret à l'aide d'une clé de chiffrement, de sorte à produire une requête (req) comprenant les données de transaction et le code secret sous forme chiffrée,
   • envoi (106) de la requête (req) au terminal, le terminal étant configuré pour transmettre la requête (req) à un serveur, le serveur (3) étant configuré pour :

      • déchiffrer la requête à l'aide d'une clé de déchiffrement, de sorte à récupérer les données de transaction et le code secret,
      • mettre en œuvre une mesure pour communiquer les données de transaction en association avec le code secret à un utilisateur du terminal,

   • réception (108) d'un code d'épreuve émanant du terminal après la mise en œuvre de la mesure,
   • vérification (110) de correspondance entre le code secret et le code d'épreuve,
   • signature numérique (112) des données de transaction à condition que le code secret et le code d'épreuve correspondent, de sorte à produire des données de transaction signées (Trx),
   • envoi (112) des données de transaction signées (Trx) au terminal.

2. Procédé selon la revendication précédente, dans lequel la clé de chiffrement et la clé de déchiffrement forment une paire de clés asymétriques.

3. Procédé selon l'une quelconque des revendications précédentes, dans lequel les données de transaction et/ou le code d'épreuve sont reçus par communication directe entre le dispositif signataire et le terminal.

**4.** Procédé selon l'une quelconque des revendications précédentes, dans lequel le dispositif signataire est ou comprend une carte à puce.

**5.** Procédé selon l'une quelconque des revendications précédentes, dans lequel la requête (req) est signée numériquement par le dispositif signataire, et le serveur est configuré pour vérifier si la requête a été signée numériquement par le dispositif signataire, la mesure étant mise en œuvre à condition que la vérification révèle que la requête a été signée numériquement par le dispositif signataire.

**6.** Procédé selon l'une quelconque des revendications précédentes, dans lequel le code d'épreuve est un code qui été saisi sur le terminal.

**7.** Procédé selon l'une quelconque des revendications précédentes, dans lequel la mesure comprend l'envoi d'un message comprenant les données de transaction en association avec le code secret à un dispositif destinataire.

**8.** Procédé selon la revendication précédente, dans lequel le dispositif destinataire est distinct du terminal.

**9.** Procédé selon la revendication 7, dans lequel :

• les données de transaction émanant du terminal ont été envoyées au dispositif signataire sur commande d'une première application (A) du terminal,
• la mesure comprend l'envoi d'un message comprenant les données de transaction en association avec le code secret à une deuxième application (B) du terminal indépendante de la première application (A), la deuxième application (B) étant configurée pour causer une restitution des données de transaction et du code secret à l'utilisateur par un périphérique de sortie du terminal.

**10.** Procédé selon l'une quelconque des revendications 7 à 9, dans lequel le serveur est configuré pour générer des données graphiques et pour inclure les données graphiques dans le message, les données graphiques présentant :

• des caractères indiquant le bénéficiaire, le montant et le code secret, et
• un bruit parasite propre à fausser une reconnaissance optique des caractères par une machine.

**11.** Procédé selon l'une quelconque des revendications 7 à 9, dans lequel dans lequel le serveur est configuré pour générer le message sous forme d'un message vocal restituant les données de transaction et le code secret, lorsque le message vocal est joué par un haut-parleur.

**12.** Procédé selon l'une quelconque des revendications 7 à 9, dans lequel le message est un message textuel.

**13.** Produit programme d'ordinateur comprenant des instructions de code de programme pour l'exécution des étapes du procédé selon l'une des revendications précédentes, lorsque ce programme est exécuté par un dispositif signataire.

**14.** Système comprenant un dispositif signataire (1), un terminal (2) et un serveur (3), dans lequel :

• le dispositif signataire (1) est configuré pour :

• recevoir des données de transaction émanant du terminal, les données de transaction indiquant un bénéficiaire et un montant d'actifs numériques à transférer au bénéficiaire,
• déterminer un code secret,
• chiffrer les données de transaction et le code secret à l'aide d'une clé de chiffrement, de sorte à produire une requête comprenant les données de transaction et le code secret sous forme chiffrée,
• envoyer la requête au terminal,

• le terminal (2) est configuré pour transmettre la requête au serveur (3),
• le serveur (3) est configuré pour :

• déchiffrer la requête à l'aide d'une clé de déchiffrement, de sorte à récupérer les données de transaction et le code secret,
• mettre en œuvre une mesure pour communiquer les données de transaction en association avec le code secret à un utilisateur du terminal,

• le terminal (2) est configuré pour envoyer un code d'épreuve au dispositif signataire après la mise en œuvre de la mesure,
• le dispositif signataire (1) est configuré pour :

• vérifier une correspondance entre le code secret et le code d'épreuve,
• signer numériquement les données de transaction à condition que le code secret et le code d'épreuve correspondent, de sorte à produire des données de transaction signées,
• envoyer les données de transaction signées au terminal (2).

Figure 1

Figure 2

Figure 3

Europäisches
Patentamt

European
Patent Office

Office européen
des brevets

**RAPPORT DE RECHERCHE EUROPEENNE**

Numéro de la demande

EP 25 20 8084

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | EP 3 528 161 A1 (SKEYECODE [FR]) 21 août 2019 (2019-08-21) * alinéas [0032] - [0033], [0035] - [0045]; figures 4-5 * ----- | 1-14 | INV. G06F21/55 G06F21/60 G06F21/64 G06Q20/06 |
| Y | US 11 335 214 B2 (FORTE ANDREA G [US]; SINGH VISHAL K [US]) 17 mai 2022 (2022-05-17) * colonne 11, ligne 1 - ligne 32 * ----- | 1-14 | G06Q20/10 G06Q20/36 G06Q20/38 G06Q20/40 H04L9/40 |

**DOMAINES TECHNIQUES RECHERCHES (IPC)**

G06F
G06Q
H04L

Le présent rapport a été établi pour toutes les revendications

| Lieu de la recherche | Date d'achèvement de la recherche | Examinateur |
|---|---|---|
| Munich | 16 février 2026 | Veillas, Erik |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 20 8084

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-02-2026

| Document brevet cité au rapport de recherche | | Date de publication | Membre(s) de la famille de brevet(s) | | Date de publication |
|---|---|---|---|---|---|
| EP 3528161 | A1 | 21-08-2019 | EP | 3528161 A1 | 21-08-2019 |
|  |  |  | WO | 2019158397 A1 | 22-08-2019 |
| US 11335214 | B2 | 17-05-2022 | EP | 3921774 A1 | 15-12-2021 |
|  |  |  | US | 2020258428 A1 | 13-08-2020 |
|  |  |  | US | 2022230563 A1 | 21-07-2022 |
|  |  |  | WO | 2020165718 A1 | 20-08-2020 |

EPO FORM P0460

Pour tout renseignement concernant cette annexe : voir Journal Officiel de l'Office européen des brevets, No.12/82